# FASCICULE DE BREVET EUROPEEN

(11) **EP 3 414 040 B1**
(45) Date de publication et mention de la délivrance du brevet: **25.10.2023**
(21) Numéro de dépôt: 17703195.2
(22) Date de dépôt: 09.02.2017
(51) Int. Cl.: B23K 101/18, B23K 37/02, B23K 9/02, B23K 9/025, B23K 9/095, B23K 9/127, B23K 9/173

(54) **DISPOSITIF POUR LA SOUDURE AUTOMATIQUE D'UN JOINT, NOTAMMENT UN JOINT DE BORDÉE**
VORRICHTUNG ZUM AUTOMATISCHEN VERSCHWEISSEN EINER NAHT, INSBESONDERE EINER V-NAHT
DEVICE FOR AUTOMATICALLY WELDING A SEAM, IN PARTICULAR A V-GROOVE SEAM JOINT

(30) Priorité: 09.02.2016 FR 1600225
(43) Date de publication de la demande: 19.12.2018
(73) Titulaire: Institut de Recherche Technologique Jules Verne, 44340 Bouguenais (FR)
(72) Inventeur: HOCQUARD, Etienne, 44000 Nantes (FR); GIRIN, Alexis, 44119 Treilliere (FR)
(74) Mandataire: Alatis
(86) Numéro de dépôt international: PCT/EP2017/052925
(87) Numéro de publication internationale: WO 2017/137515

(56) Documents cités:
- DE-A1- 1 930 154
- DE-T2- 69 013 849
- KR-B1- 101 078 233

## Description

L'invention concerne un procédé et un dispositif pour la soudure automatique d'un joint, notamment un joint de bordée, comme défini dans le préambule de la revendication 1 (voir, par exemple, KR 101 078 233 B1).

L'invention est plus particulièrement, mais non exclusivement, destinée à la réalisation d'une soudure sur la coque d'un navire, notamment au niveau des jonctions entre des tronçons de coque préfabriqués. Des problèmes similaires sont rencontrés dans le soudage de cuves, de mâts ou de conduits de grande dimension, dans l'industrie nucléaire, la pétrochimie et l'énergie éolienne, sans que ces exemples ne soient limitatifs.

Selon l'art antérieur, ces soudures de grande longueur sont réalisées par des opérateurs le long de parois verticales, voire au plafond, et nécessitent par conséquent l'installation d'échafaudages complexes et coûteux. Afin de résoudre ces inconvénients, différentes solutions de robot crapahuteurs, dit « *crawler* » en anglais, sont utilisées, lesquels robots sont aptes à se déplacer, notamment verticalement, le long du joint à souder. De tels robots utilisent soit des câbles ou des rails installés sur la structure à souder afin de se déplacer, ou encore s'agrippent et se déplacent directement sur ladite structure au moyen de ventouses ou d'aimants, notamment des chenilles aimantées.

Le document EP 1 884 453 décrit un tel robot crapahuteur utilisant des ventouses, plutôt adapté à la construction aéronautique.

Le document CN104874951 décrit un robot crapahuteur destiné notamment au soudage de structures marines, utilisant des chenilles aimantées.

Le document US 2012/0111843 décrit un robot crapahuteur utilisant un chariot à chenilles aimantées pour s'accrocher à la structure en cours de soudage.

Ces robots de l'art antérieur, s'ils permettent déplacer la torche de soudage le long des joints soudés, éprouvent cependant des difficultés à réaliser correctement la soudure. En effet, le profil à combler du joint soudé est sensiblement trapézoïdal, les bords des panneaux ainsi assemblés étant chanfreinés. Ladite soudure nécessite en général que soient effectuées plusieurs passes. L'obtention d'une soudure de qualité nécessite d'adapter l'oscillation de la torche entre les bords du joint, c'est-à-dire selon des mouvements contenus dans un plan sensiblement normal à la direction de déplacement du robot le long dudit joint, ceci en fonction du profil de la soudure et plus particulièrement de la passe précédente. La largeur de l'espace à combler pour réaliser le cordon de soudure change en fonction de la passe réalisée et de la passe précédente. L'adaptation des oscillations comprend l'amplitude des oscillations entre les bords du joint soudé et la temporisation de sorte à déposer une quantité de matière suffisante. Fréquemment le profil du cordon de soudure réalisé lors de la passe précédente est dissymétrique de sorte que la quantité de matière à combler est plus importante d'un côté que de l'autre et nécessite une temporisation dissymétrique résultant en une temporisation à droite du cordon de soudure différente de la temporisation à gauche.

Cette opération de soudage est réalisée lors de chaque passe sans difficulté par un opérateur expérimenté à partir de l'analyse visuelle qu'il réalise dudit joint soudé avant et pendant la soudure et de sa dextérité manuelle. Dans le cas d'un robot autonome la précision de positionnement de la torche de soudage et de ses mouvements par rapport au joint soudé n'est pas compatible avec la précision qu'il est possible d'atteindre avec les moyens de déplacement d'un robot crapahuteur, particulièrement lorsque ces moyens utilisent des chenilles. De plus, les tentatives, selon l'art antérieur, d'asservissement des mouvements de la torche au profil du cordon de soudure s'avèrent particulièrement instables ou ne donnent pas satisfaction. En effet, le profil du joint soudé évolue au cours des passes et notamment les bords du joint soudé qui s'arrondissent et deviennent particulièrement difficiles à détecter. De plus, le profil du joint soudé, particulièrement entre deux passes successives, dépend de nombreux facteurs et n'est pas reproductible. Aussi, il est nécessaire d'adapter en permanence les conditions de soudage notamment l'amplitude des oscillations de la torche et les temporisations, comme le ferait un opérateur expérimenté. Une telle programmation adaptative s'avère particulièrement sensible aux défauts et aux incertitudes de mesure profilométrique du joint soudé. Aussi, les robots crapahuteurs de soudure selon l'art antérieur ne sont pas autonomes et doivent être pilotés en permanence par un opérateur expérimenté.

L'invention vise à résoudre les inconvénients de l'art antérieur et concerne à cette fin un système de soudage autonome de deux panneaux chanfreinés, notamment selon un joint de bordée, comme défini dans la revendication 1.

Ainsi, le système objet de l'invention utilise des méthodes particulièrement robustes pour le suivi du joint soudé et permet en utilisant des actionneurs différents pour le suivi du joint soudé et pour le pilotage des oscillations, de s'adapter finement à la géométrie du joint soudé au fil des passes.

Dans tout le texte, les termes « section ouverte » désignent la partie non remplie de matière d'une section de l'espace délimité, au niveau du joint soudé, par les bords des panneaux à assembler.

L'invention est avantageusement mise en oeuvre selon les modes de réalisation et les variantes exposés ci-après, lesquels sont à considérer individuellement ou selon toute combinaison techniquement opérante.

Avantageusement, le calcul réalisé en eii) comprend les étapes consistant à :
i. définir lors de la première mesure du joint soudé un triangle dont le sommet est l'intersection des deux droites définissant les pentes moyennes des chanfreins des panneaux soudés et dont la base est délimitée par la surface des panneaux soudés opposée audit sommet ;
ii. à partir du profil acquis en ei) centrer le triangle obtenu en i) sur le profil, en faisant coïncider la base avec le sommet des panneaux et en alignant latéralement le centre de gravité du triangle avec le barycentre de la section ouverte du profil obtenu en ei).

Ainsi, le cordon de soudure réalisé reste toujours parfaitement centré par rapport au profil du joint soudé, même si le chariot est excentré par rapport audit joint soudé, ce qui permet d'utiliser un chariot moins agile mais plus robuste vis-à-vis de sa liaison sur les panneaux soudés.

Avantageusement, le calcul de l'amplitude des oscillations de la torche et des temporisations est basé sur des paramètres scalaires obtenus par moyennage et sommation du signal issu du profilomètre. Ainsi les caractéristiques géométriques et cinématiques adaptatives de la réalisation de la soudure sont basées sur un traitement robuste et rapide du signal issu du profilomètre sans passer par un tracé géométrique du profil.

Selon un mode de réalisation avantageux, le calcul de l'amplitude des oscillations de la torche comprend les étapes consistant à :
iii. définir une ligne parallèle à la base du triangle correspondant à la hauteur moyenne du profil mesuré en ei) par rapport à ladite base du triangle obtenu en i) et recentré sur le profil obtenu en ii) ;
iv. calculer les points d'intersection de cette ligne moyenne avec les deux autres côtés du triangle défini en i) ;
v. définir l'amplitude des oscillations, centrées sur le barycentre de la section ouverte du profil obtenu en ei), par la longueur du segment de la ligne moyenne, compris entre les deux intersections calculées en iv).

Ainsi, l'amplitude des oscillations est calculée de manière robuste, notamment vis-à-vis des artefacts de mesure, en regard du profil réel du cordon de soudure obtenu lors de la passe précédente.

Selon un mode de réalisation avantageux, le calcul des temporisations droite et gauche comprend les étapes consistant à :
vi. calculer la valeur moyenne depuis la base du triangle calculé en i), de la portion de profil obtenu en ei) située à gauche du barycentre ;
vii. calculer la valeur moyenne depuis la base du triangle calculé en i), de la portion de profil obtenu en ei) située à droite du barycentre ;
viii. définir la différence de temporisation à droite et à gauche en fonction de la différence des valeurs moyennes calculées en vi) et en vii).

Ce mode de calcul de la temporisation est particulièrement robuste vis-à-vis des artefacts et incertitudes de mesure.

Selon un mode de réalisation, les moyens motorisés de déplacement du chariot entraînent des chenilles aimantées. Ainsi le chariot du système objet de l'invention est apte à se déplacer dans toutes les directions sur des panneaux en acier.

Avantageusement, la plate-forme comprend trois axes de déplacements linéaires perpendiculaires entre eux. Ainsi, la plate-forme est apte à déplacer l'effecteur qu'elle supporte, et plus particulièrement la torche de soudage, dans une direction parallèle au déplacement du chariot ce qui permet, par combinaison des deux mouvements d'obtenir plus de fluidité dans le déplacement de l'effecteur supporté par la plate-forme.

Selon un mode de réalisation perfectionné, la plate-forme comprend un axe de déplacement en rotation parallèle à l'axe de rotation en lacet un chariot. Cet axe supplémentaire permet également d'améliorer le suivi de la trajectoire visée pour l'effecteur supporté par la plate-forme, plus particulièrement dans le cas d'un chariot à chenilles ou le déplacement en lacet implique un certain glissement.

Avantageusement, la plate-forme comprend une interface de connexion lui permettant de supporter des effecteurs différents. Ainsi, le système objet de l'invention est utilisable pour d'autres opérations, notamment le parachèvement ou le contrôle de la soudure réalisée.

Avantageusement, le système objet de l'invention comprend :
f. un capteur de suivi du joint soudé à l'extrémité opposée du chariot par rapport au profilomètre.

Ce capteur supplémentaire permet d'aligner parfaitement le chariot avec le joint soudé au cours de son déplacement.

Avantageusement, le système objet de l'invention comprend :
g. des moyens de localisation idiothétique ou allothétique de la position du chariot le long du joint soudé.

Ainsi la position exacte du chariot en cours de soudage est connue.

Avantageusement, le système objet de l'invention comprend une base de données pour la définition des conditions de soudage pour la réalisation du joint soudé en fonction des caractéristiques des panneaux . Ainsi, le système est apte à fonctionner de manière autonome, par exemple au sein d'un système de production automatisée.

Avantageusement, le système objet de l'invention comprend selon ces derniers modes de réalisation :
h. des moyens de mémoire pour enregistrer les conditions de soudage et la position instantanées du chariot.

Ainsi le système combine les informations de positionnement et de conditions de mise en oeuvre pour assurer une traçabilité des conditions de soudage des panneaux.

Avantageusement, le système objet de l'invention comprend :
j. un robot pour la manipulation et le positionnement relatif des panneaux avant et pendant la soudure.

Ainsi, le robot et le chariot du système objet de l'invention agissent de concert dans le cadre d'un processus de fabrication et d'assemblage automatisé.

L'invention est exposée ci-après selon ses modes de réalisation préférés, nullement limitatifs, et en référence aux figures 1 à 3, dans lesquelles :
- la figure 1 représente selon une vue de principe de dessus, un exemple de réalisation d'un chariot motorisé sur chenilles du système objet de l'invention, placé sur des tôles liées par un joint soudé, sans la torche de soudage et sans les axes de déplacement de ladite torche ;
- la figure 2 illustre sur des sections en coupe AA définie figure 1, différents stades de réalisation d'une soudure et le principe des calculs réalisés pour ces différentes phases, figure 2A sur le joint soudé avant soudure, figure 2B sur un exemple de calcul des oscillations à partir du joint soudé obtenu lors de la première passe, figure 2C sur un exemple de calcul des temporisations droite et gauche à partir du profil du joint soudé obtenu après la deuxième passe :
- et la figure 3 montre selon une vue de principe en perspective, le positionnement d'une torche de soudure MIG-MAG en regard du joint soudé

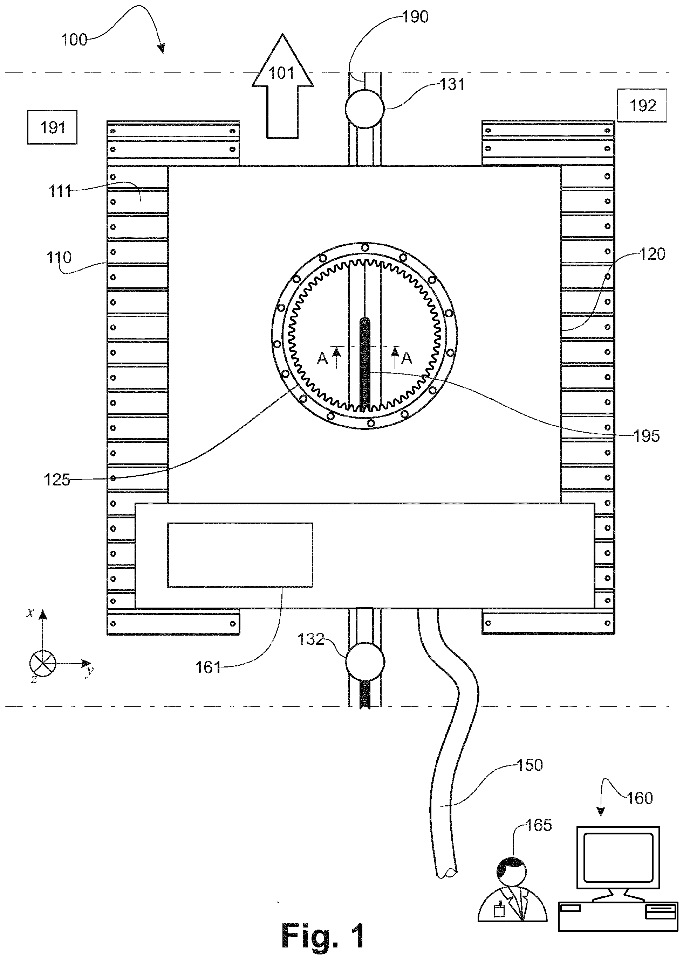

Figure 1, selon un exemple de réalisation, le système objet de l'invention comprend un robot crapahuteur de soudage comprenant un chariot (100) apte à se déplacer le long d'un joint (190) soudé entre deux tôles (191, 192). Selon cet exemple de mise en oeuvre les deux tôles (191, 192) sont assemblées bord à bord selon une soudure en montant, le déplacement (101) du chariot, pour la réalisation d'un cordon (195) de soudure, étant réalisé selon la direction des *x* positifs, l'axe des *x* étant parallèle au joint (190) soudé, vertical et positif vers le haut, la direction verticale étant parallèle à l'accélération de la pesanteur. Le système objet de l'invention est également apte à réaliser une soudure selon un joint soudé horizontal ou oblique. Selon cet exemple de réalisation, les tôles soudées sont des tôles d'acier, par exemple d'une épaisseur comprise entre 5 mm et 20 mm et le chariot (100) est cramponné et se déplace sur lesdites tôles au moyen de 2 chenilles (110) comprenant une pluralité de secteurs (111) aimantés. Selon cet exemple de réalisation, chaque secteur aimanté est de forme prismatique et la surface en contact avec la tôle est sensiblement plane. La longueur des chenilles (110) est déterminée de telle sorte que la somme des forces de frottement proportionnelles aux forces d'attraction individuelles de chaque secteur aimanté en contact avec la tôle, soit suffisante pour soutenir le poids du chariot sans risque de glissement ni de basculement. La largeur des secteurs aimantés est déterminée, d'une part, pour que le couple des moyens d'entraînement des chenilles soit suffisant pour vaincre la force d'attraction individuelle d'un secteur aimanté et ainsi décoller celui-ci sans à-coup lors de la progression du chariot, et par ailleurs, que les secteurs aimantés restant en contact avec la tôle entre le moment ou le secteur le plus à l'arrière des chenilles est décollé et le secteur le plus à l'avant de chaque chenille n'est pas encore collé, soit suffisant pour maintenir le chariot sur la tôle sans risque de glissement ni de basculement. Sachant que par ailleurs, il est plus avantageux d'avoir des chenilles les plus courtes possible et un mécanisme d'entraînement des chenilles le moins haut possible pour assurer la plus grande agilité du chariot (100). Ainsi, d'une manière générale, il est préférable que les chenilles comprennent un grand nombre de secteurs aimantés de faible largeur et présentant individuellement une force d'attraction plus faible tout en conservant une longueur de chenille adaptée. Avantageusement, pour la réalisation d'opération de soudage le chariot est apte à se déplacer à une vitesse contrôlée comprise entre 100 mm.min⁻¹ et 1000 mm.min⁻¹. Les moteurs d'entraînement des chenilles comportent avantageusement des codeurs. Les informations de ces codeurs sont avantageusement utilisées pour mesurer et contrôler la vitesse de chaque chenille mais aussi pour déterminer des informations odométriques relatives au déplacement du chariot le long de la structure sur laquelle il évolue, par exemple la coque d'un navire. Ainsi le cumul des rotations des moteurs d'entraînement des chenilles permet de mesurer la distance parcourue, alors que la différence de vitesse de rotation desdits moteurs permet de mesurer l'orientation du chariot autour de l'axe z de rotation en lacet.

Le chariot (100) comporte une plate-forme (120) supportant notamment les moyens de motorisation des chenilles, l'électronique de commande des chenilles, un effecteur (non représenté) et des axes de déplacement (non représentés) dudit effecteur relativement au chariot, ainsi que l'électronique de commande de ces axes de déplacement. Ladite plate-forme comprend des moyens (125) pour installer un effecteur et des moyens de déplacement relatif dudit effecteur par rapport au chariot (100). Selon des exemples de réalisation non limitatifs, l'effecteur est une torche de soudage, un moyen de meulage, un moyen de rivetage, une sonotrode, notamment pour réaliser un contrôle par ultrason ou encore un moyen de marquage. Lorsque l'effecteur est une torche de soudage, les axes de déplacement relatifs pilotés de l'effecteur par rapport au chariot (100), comprennent au moins les axes de déplacement perpendiculaires à la longueur du joint (190) soudé, c'est-à-dire selon les axes *y* et *z*. Selon d'autres modes de réalisation, les axes de déplacement relatif de l'effecteur par rapport à la plate-forme comprennent la translation selon l'axe *x*, parallèle au sens de déplacement du chariot, les rotations autour des axes *x, y* et z. Selon des variantes, ces axes de déplacement complémentaires sont des axes pilotés, permettant un mouvement continu et à vitesse maîtrisée de l'effecteur selon l'axe considéré, ou des axes de positionnement, procurant un degré de liberté de réglage, notamment de l'orientation de la torche par rapport au joint soudé, lequel réglage reste fixe durant l'opération réalisée.

Avantageusement, pour la réalisation d'opérations de soudage, les moyens de déplacement relatifs de l'effecteur permettent d'atteindre des vitesses de déplacement de 1000 mm.min⁻¹ avec des capacités d'accélération de l'ordre de 10 m.s⁻², au moins selon l'axe y, ceci afin de permettre la réalisation d'oscillations de +/- 10 mm à la vitesse de 1000 mm.min⁻¹. Les moyens de déplacement de l'effecteur sont, par exemple, des moteurs linéaires.

Les moyens d'installation (125) et de déplacement de l'effecteur, sont avantageusement placés au centre de la plate-forme (120) entre les chenilles du chariot (100) de sorte à profiter d'un support rigide et stable.

Selon cet exemple de réalisation, le chariot (100) motorisé du système objet de l'invention comporte un profilomètre (131) apte à mesurer le profil du joint soudé (190) selon une section dans un plan selon *y-z*, sensiblement perpendiculaire à la direction de progression du chariot et devant l'effecteur dans le sens (101) de progression du chariot. Selon un mode de réalisation avantageux, le chariot comprend un deuxième profilomètre (132) pour la mesure du profil du joint soudé, derrière l'effecteur dans le sens (101) de progression du chariot (100).

Les profilomètres (131, 132) utilisent préférentiellement une technologie sans contact apte à mesurer le profil du joint soudé depuis le sommet des tôles (191, 192) jusqu'au fond dudit joint. Pour les applications de soudage dans le domaine de la construction navale, la technologie mesurant l'altitude en *z* du profil par triangulation laser, le long d'un balayage selon *y*, est parfaitement adaptée.

La réalisation d'une soudure correcte, y compris sur des tôles épaisses, nécessite une précision dans les déplacements relatifs de la torche de soudage par rapport au joint soudé inférieure au millimètre. Le chariot sur chenilles, seul, n'est pas apte à atteindre une telle précision, mais la combinaison du profilomètre, du traitement du signal profilométrique et des moyens de déplacement relatif de l'effecteur par rapport au chariot, permet d'obtenir la précision requise.

Un câble (150) de liaison permet d'apporter au chariot (100) les sources d'énergie, par exemple électrique, hydraulique ou pneumatique, nécessaires au fonctionnement des moyens de motorisation des chenilles, de l'effecteur et des moyens de déplacement de l'effecteur. Selon un exemple de réalisation, le chariot comporte un ordinateur (161) embarqué pour le pilotage de plusieurs fonctions dudit chariot et de l'effecteur. Avantageusement, le câble (150) de liaison permet également l'échange de données entre ledit ordinateur (161) embarqué et une centrale (160) de commande et de supervision. Selon cet exemple de réalisation, le chariot est également pourvu d'autres capteurs (non représentés) permettant à un superviseur (165) d'observer l'environnement du chariot et les conditions de réalisation de l'opération en cours. À titre d'exemple non limitatif, lesdits autres capteurs comprennent une caméra vidéo, dans le spectre visible ou infrarouge, un capteur ultrasonore par exemple pour mesurer l'épaisseur de la tôle, un LiDAR, une boussole électronique ou encore un système de positionnement global comme un GPS d'atelier. Avantageusement, le chariot comprend en outre des capteurs de détection de proximité (non représentés) par exemple ultrasonores, lui permettant d'éviter une collision avec un objet ou un autre robot. La logique de commande du chariot, de ses effecteurs et des axes de déplacement desdits effecteurs est, selon des variantes de réalisation, intégrée entièrement sur la plate-forme et l'ordinateur (161) embarqué, ou répartie entre l'ordinateur (161) embarqué et la centrale (160) de commande et de supervision, la liaison entre les deux étant réalisée par des moyens filaires, notamment par le câble (150) de liaison ou par des moyens radios, par exemple en utilisant le protocole Wifi^{®}. La centrale de commande et de supervision permet notamment à un opérateur de suivre à distance les conditions d'exécution des tâches par le système objet de l'invention, mais aussi, à cet opérateur de transmettre à l'ordinateur (161) embarqué des informations sur les conditions de réalisation de la soudure, comme l'intensité du courant d'arc ou la vitesse de déplacement du chariot en fonction de la nature des panneaux (191, 192) assemblés. Selon un exemple de réalisation, la centrale de commande et de supervision est commune à plusieurs systèmes de sorte qu'un opérateur unique surveille à distance la réalisation de plusieurs soudures.

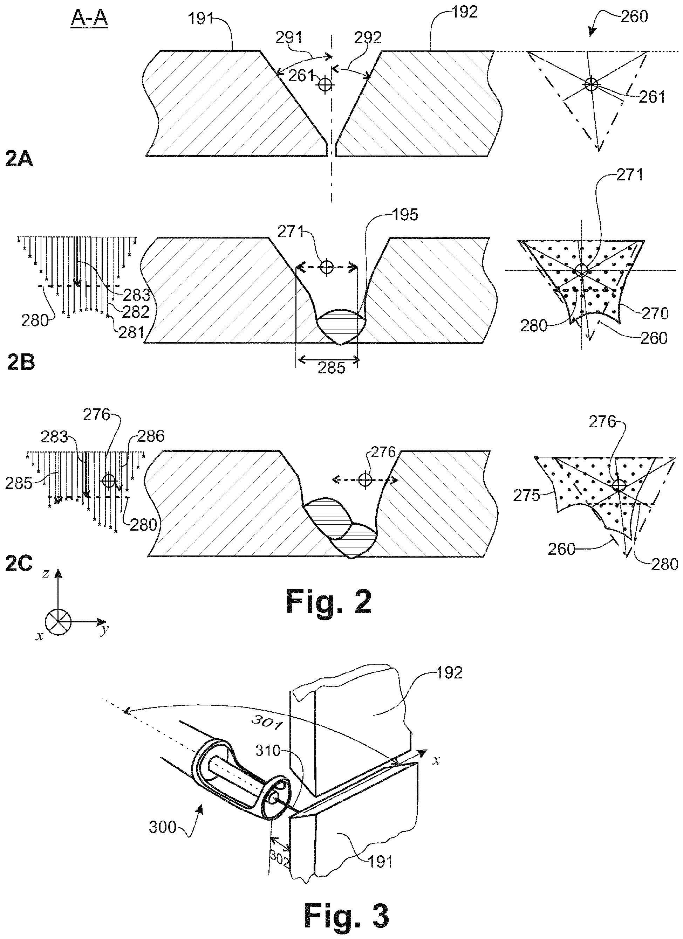

Figure 2A, avant l'assemblage des tôles (191, 192) les bords desdites tôles sont chanfreinés, ledit chanfreinage est réalisé par des moyens mécaniques, par meulage, par fraisage ou par découpe au plasma de sorte que le chanfrein est relativement uniforme en angle et en largeur sur le bord d'une tôle. Avant la soudure, le joint soudé est mesuré par le proflilomètre sur toute ou partie de la longueur dudit joint soudé. La pente moyenne (292) du chanfrein à droite et la pente moyenne (291) du chanfrein à gauche, sont déterminées dans le plan *y-z*, par exemple à partir de la dérivée du signal délivré par le profilomètre. Les droites correspondant à ces pentes moyennes ainsi que la droite reliant les intersections des chanfreins avec les faces supérieures des tôles (191, 192) permettent de construire un triangle (260) représentant la section moyenne théorique de la section ouverte du joint soudé. Avant soudage, la dispersion dans les pentes et dans la position des intersections le long du joint soudé est faible, les surfaces sont propres, de sorte qu'une méthode rapide de calcul des pentes comme la méthode des dérivées est utilisable sans risque de dispersion. La section moyenne théorique représentée par le triangle (260) ne diffère de la section ouverte réelle en un point donné que du même ordre de grandeur que l'incertitude de mesure du profilomètre. La position du barycentre (261) du triangle (260) moyen est aisément calculée.

Pour les mesures en cours de soudage, le système objet de l'invention utilise le signal délivré par le profilomètre en sommant et en moyennant ce signal, conjointement au triangle (260) moyen obtenu lors de la mesure du joint soudé avant soudage. Ainsi, le système objet de l'invention ne se fonde pas sur la détermination précise de la géométrie du joint soudé mais sur un signal intégré, donc robuste, représentatif de cette géométrie, sur le barycentre de la section, dont la détermination est également robuste, et sur le triangle moyen (260) calculé une seule fois pour l'ensemble de l'opération de soudage, y compris lorsque celle-ci comprend plusieurs passes. Ainsi, lors de la réalisation du joint soudé, quelle que soit la passe, le chariot décrit le long du joint soudé une trajectoire suivant la position, projetée dans le plan *x-y*, du barycentre (261) de la section ouverte. Le calcul du barycentre est obtenu sur la base d'une intégration du signal délivré par le profilomètre.

Figure 2B, à l'issue de la première passe de soudage, créant le premier cordon (195) de soudure, les conditions géométriques et cinématiques de réalisation de la deuxième passe : centrage de la torche, amplitude des oscillations et durée des temporisations à chaque extrémité des oscillations, sont déterminés en analysant le profil de la section ouverte du joint soudé, à partir de l'acquisition réalisée par le profilomètre. Selon cet exemple de mise en oeuvre la deuxième passe ne recouvre pas entièrement la première passe. La méthode décrite ci-après est cependant applicable au cas où la passe de soudage suivante recouvre intégralement la passe de soudage précédente. Comme indiqué ci-dessus, le système objet de l'invention n'analyse pas le tracé du profil en tant que tel, mais des paramètres obtenus par sommation ou moyennage du signal délivré par le profilomètre.

Ainsi, à partir de l'acquisition profilométrique, la position du barycentre (271) dans le plan *y-z* la section ouverte (270) du joint soudé est déterminée.

Comme indiqué plus haut, les positions successives du barycentre (271) dans le plan *x-y* définissent la trajectoire en *x* de la torche de soudage le long du joint soudé, de sorte que la torche reste toujours centrée par rapport à la section ouverte du joint soudé et les oscillations de la torche selon y sont centrées sur le barycentre (271) de ladite section ouverte (270).

Pour déterminer l'amplitude des oscillations, selon un exemple de mise en oeuvre, le triangle moyen (260) calculé précédemment est superposé à la section ouverte (270) mesurée, en alignant latéralement, selon y, le barycentre (261) dudit triangle (260) avec le barycentre (271) de la section ouverte et en positionnant la base du triangle (260) moyen avec la ligne reliant les surfaces supérieures des tôles (191, 192), lesquelles base du triangle (260) et surface supérieure des tôles sont sensiblement parallèles à l'axe y dans la section. Cette étape de calcul ne nécessite pas la détermination du profil exact de la section ouverte mais uniquement la position du barycentre et le sommet des tôles.

Le signal délivré par profilomètre lors du balayage de la section ouverte du joint soudé comprend une série de points (281) correspondant chacun à une altitude (282). À partir de ce signal, l'altitude moyenne (283) desdits points est déterminée. La ligne (280) parallèle à la base du triangle, généralement sensiblement parallèle à *y*, et située à cette altitude moyenne (283) par rapport à la base dudit triangle, intersecte les côtés du triangle (260) moyen, définissant ainsi une longueur (285) entre ces deux intersections. L'amplitude des oscillations est prise égale à cette longueur (285) entre les deux intersections de la ligne (280) d'altitude moyenne avec les côtés du triangle (260) moyen, centré latéralement sur le barycentre (271) de la section (270) ouverte du joint soudé. Les oscillations de la torche sont centrées sur le barycentre (271) de la section ouverte du joint soudé. L'ensemble des calculs selon cet exemple de mise en oeuvre font appel à des traitements mathématiques simples, qui sont calculés très rapidement, à la volée, pendant les opérations de soudage et la progression du chariot le long du joint soudé. Ces calculs font appel à des sommations et des moyennages du signal délivré par le profilomètre, ils sont par conséquent robustes et stables vis-à-vis des artefacts de mesure, les calculs géométriques, comme le calcul des intersections, sont réalisés par rapport au triangle (260) moyen et ne nécessitent pas la détermination de la forme précise du profil de la section ouverte dans le plan *y-z.*

Un exemple de méthode pour la détermination des temporisations droites et gauches est illustré figure 2C.

Figure 2C, les conditions de réalisation de la troisième passe de soudage sont déterminées comme illustré précédemment à partir des paramètres moyennés relatifs au profil de la section ouverte (275) du joint soudé après la réalisation de la deuxième passe. L'amplitude des oscillations est déterminée comme précédemment, à partir de l'intersection, avec les côtés du triangle (260) moyen, de la ligne (280) dont l'altitude correspond à la valeur moyenne du signal du profilomètre, le triangle étant centré latéralement sur le barycentre (276) de la section (275) ouverte du joint soudé. La différence de temporisation à droite et à gauche est proportionnelle à la différence de la valeur moyenne (285) du signal profilométrique des points situés à gauche du barycentre (276) de la section ouverte du joint soudé, et de la moyenne (286) du signal profilométrique correspondant aux points situés à droite du barycentre (276) de la section ouverte du joint soudé. Toutes ces valeurs (283, 286, 285) moyennes qui représentent des caractéristiques scalaires de la section ouverte du joint soudé sont obtenues en même tant que le calcul du barycentre de ladite section ouverte.

Ce procédé de détermination des conditions de réalisation des passes de soudures est particulièrement adapté au cas d'un robot crapahuteur, utilisant des chenilles ou d'autres moyens de déplacement sur les tôles étant assemblées par soudage. La méthode en tant que telle est toutefois applicable à d'autres situations de soudage automatisées utilisant des robots polyarticulés, positionnés ou non sur les tôles à souder.

En revenant à la figure 1, le système objet de l'invention est mis en oeuvre pour la réalisation d'une soudure de tôles d'acier d'une épaisseur comprise entre 10 mm et 20 mm selon le procédé MIG-MAG pour la réalisation d'un joint de bordée sur la coque d'un navire. Le procédé MIG-MAG est connu de l'art antérieur et n'est pas décrit plus avant. Selon un exemple de réalisation, la plate-forme (120) du chariot supporte à cette fin un dévideur de fil de fourrure, un générateur d'arc et des moyens, par exemple dans l'ordinateur (161) embarqué, pour contrôler notamment la vitesse de dévidage du fil de fourrure et l'intensité du courant d'arc. Selon un exemple de réalisation, le gaz protecteur est apporté au chariot via le câble (150) de liaison. Selon cet exemple de mise en oeuvre, les moyens (160) de contrôle et de supervision comprennent une base de données associant les paramètres de soudage tels que l'intensité du courant, la vitesse de dévidage du fil de métal d'apport, la nature du fil de métal d'apport, la vitesse de déplacement selon *x* du chariot ainsi que la nature et le débit du gaz de protection, sans que cette liste ne soit limitative, paramètres associés à la nature et à l'épaisseur des tôles soudées. Ces paramètres de soudage sont transmis au chariot et à l'ordinateur (161) embarqué par le câble (150) de liaison, ou par des moyens radios, de sorte à piloter les moyens de soudure.

Figure 3, selon un exemple de mise en oeuvre du procédé de soudage par le système objet de l'invention, les tôles (191, 192) ont une épaisseur de 20 mm et sont chanfreinées à 45°. La torche (300) de soudage avance selon les *x* positifs à une vitesse comprise entre 500 et 650 mm.min⁻¹, en formant un angle (301) compris entre 90° et 110° par rapport à la direction (x) de l'avance. La buse de la torche (300) de soudage est placée à une distance (302) du sommet des tôles (191, 192) comprise entre 5 mm et 15 mm, l'amplitude des oscillations est comprise entre 1 mm et 20 mm selon les passes, et les temporisations sont comprises entre 0 et 2 secondes, la vitesse d'oscillation, selon l'axe y, étant comprise entre 500 mm.min⁻¹ et 1000 mm.min⁻¹. Le fil est alimenté à une vitesse comprise entre 4 et 10 m.min⁻¹, l'intensité est comprise entre 120 A et 230 A selon les passes. La vitesse de sortie du fil est adaptée aux conditions de soudure, de sorte que la longueur de fil, non encore consommé, sortant de la buse soit sensiblement constante. L'homme du métier adapte ces conditions en fonction du travail réalisé, notamment par des essais sur des coupons, et stocke les conditions ainsi déterminées dans la base de données des moyens de contrôle et de supervision. Selon un mode de réalisation, les conditions de soudage calculées et appliquées le long du joint soudé, sont archivées dans une mémoire des moyens de supervision en même temps que la position correspondante du chariot le long du joint soudé. Selon un exemple de réalisation, la position du chariot le long du joint soudé est déterminée à partir de l'information odométrique tirée du déplacement des chenilles. Ces informations idiothétiques, sont, selon un mode de réalisation avantageux, complétées par des informations allothétiques tirées des moyens de supervision associés au chariot tels que la caméra vidéo ou le LiDAR, la boussole électronique ou le système de positionnement de type GPS d'atelier. L'archivage de ces données, permet notamment de détecter des cas de mauvaise mise en oeuvre du procédé ou de rapprocher les conditions de soudage de défauts constatés lors d'un contrôle non destructif ultérieur de la soudure.

Les moyens de contrôle et de supervision s'intègrent avantageusement dans un système plus vaste de gestion de la fabrication automatisé comprenant d'autres robots, par exemple des robots à câbles, aptes à manipuler et positionner les tôles en vue de leur assemblage. Les informations de positionnement du chariot, de nature idiothétique ou allothétique, sont ainsi échangées en permanence avec lesdits moyens de contrôle et de supervision de sorte que la position instantanée du chariot, mais aussi sa trajectoire sont connues du système de gestion de la fabrication automatisée afin de planifier les tâches des autres robots, et éventuellement des opérateurs, notamment pour éviter les collisions.

La description ci-avant et les exemples de réalisation, montrent que l'invention atteint le but visé, en fournissant un système auto-adaptatif apte à réaliser une opération de fabrication, plus particulièrement une soudure, dans un environnement de chantier en production automatisée comprenant d'autres robots évoluant en synergie avec le système objet de l'invention, par exemple, des robots à câbles, en particulier des robots parallèles reconfigurables à câbles, aptes à manipuler et positionner les tôles, notamment en changeant verticalement leur orientation, en vue de leur assemblage.

## Revendications

1. Système de soudage autonome de deux panneaux (191, 192) chanfreinés, notamment selon un joint de bordée, selon une séquence de soudure comprenant plusieurs passes et comportant
a. un chariot (100) comprenant des moyens motorisés pour se déplacer le long d'un joint soudé (190) ;
b. une plate-forme (120) portée par le chariot comprenant des actionneurs et des moyens de guidage, dits axes de déplacement, aptes à supporter et à déplacer un effecteur relativement au chariot (100) selon un mouvement comprenant deux axes (*y,z*) perpendiculaires à la direction (x) de progression du chariot (100) le long du joint soudé (190) ;
c. une torche de soudage supportée en tant qu'effecteur par ladite plate-forme (120) ;
d. un profilomètre (131) porté par le chariot et apte à acquérir un signal fonction du profil du joint soudé (190) devant la torche de soudage dans le sens (101 ) de progression du chariot (100) le long dudit joint soudé ;
e. un ordinateur (160, 161) de pilotage apte à :
ei. acquérir le signal issu du profilomètre (131) pour mesurer le profil d'une section ouverte du joint soudé sur toute ou partie de la longueur du joint soudé, la section ouverte du joint soudé étant la partie non remplie de matière d'une section de l'espace délimité, au niveau du joint soudé, par les bords des panneaux à assembler ;
eii. réaliser des calculs de profil du joint soudé;
eiii. piloter les axes de déplacement de la plate forme et les moyens motorisés du chariot en fonction du calcul réalisé en eii) ;
**caractérisé en ce que**:
- l'ordinateur calcule à partir de l'acquisition prolifométrique les positions successives du barycentre dans le plan y-z des sections ouvertes du profil mesuré en ei) le long du joint soudé (190) ; les positions successives du barycentre dans le plan x-y définissent la trajectoire en x de la torche de soudage le long du joint soudé (190);
- le pilotage des moyens motorisés du chariot est réalisé en suivant des positions successives du barycentre de la section ouverte du profil mesuré en ei) le long du joint soudé (190) ;
- le pilotage des axes de déplacement de la plate forme est réalisé de sorte que l'effecteur soit déplacé entre deux pentes moyennes des bords chanfreinés du joint soudé (190), calculées lors de la première mesure dudit joint soudé, réalisée avant le soudage des panneaux.

2. Système selon la revendication 1, dans lequel le calcul réalisé en eii) comprend les étapes consistant à :
i définir lors de la première mesure du joint soudé un triangle (260) dont le sommet est l'intersection des deux droites définissant les pentes moyennes (291 , 292) des chanfreins des panneaux soudés (191 , 192) et dont la base est délimitée par la surface des panneaux soudés opposée audit sommet ;
ii à partir du profil la section ouverte (270, 275) du joint soudé acquis et mesuré en ei), centrer le triangle (260) obtenu en i) en faisant coïncider la base avec le sommet des panneaux (191, 192) et en alignant latéralement le barycentre (261) du triangle (260) avec le barycentre (271, 276) de la section ouverte (270, 275) du profil obtenu en ei).

3. Système selon la revendication 2, dans lequel les calculs réalisés en eii) comprennent un calcul de l'amplitude des oscillations de la torche et des temporisations est basé sur des paramètres scalaires obtenus par moyennage et sommation du signal issu du profilomètre.

4. Système selon la revendication 3, dans lequel le calcul de l'amplitude des oscillations de la torche comprend les étapes consistant à :
iii. définir une ligne (280) parallèle à la base du triangle correspondant à hauteur moyenne du profil mesuré en ei) par rapport à ladite base du triangle (260) obtenu en i) et recentré sur le profil obtenu en ii) ;
iv. calculer les points d'intersection de cette ligne (280) moyenne avec les deux autres côtés du triangle défini en i) ;
v. définir l'amplitude des oscillations, centrées sur le barycentre (271, 276) de la section ouverte du profil obtenu en ei), par la longueur (285) du segment de la ligne moyenne (280), compris entre les deux intersections calculées en iv).

5. Système selon la revendication 3, dans lequel le calcul des temporisations droite et gauches comprend les étapes consistant à :
vi. calculer une première valeur (285) moyenne depuis la base du triangle calculé en i), de la portion de profil obtenu en ei) située à gauche du barycentre de la section ouverte ;
vii. calculer une deuxième valeur (286) moyenne depuis la base du triangle calculé en i), de la portion de profil obtenu en ei) située à droite du barycentre de la section ouverte ;
viii. définir la différence de temporisation à droite et à gauche en fonction de la différence des première et deuxième valeurs moyennes calculées en vi) et en vii).

6. Système selon la revendication 1 , dans lequel les moyens motorisés de déplacement du chariot entraînent des chenilles aimantées.

7. Système selon la revendication 6, dans lequel la plate-forme comprend trois axes de déplacements linéaires perpendiculaires entre eux.

8. Système selon la revendication 7, dans lequel la plate-forme (120) comprend un axe de déplacement en rotation parallèle à l'axe (z) de rotation en lacet du chariot.

9. Système selon la revendication 7, dans lequel la plate-forme comprend une interface de connexion lui permettant de supporter des effecteurs différents.

10. Système selon la revendication 1, comprenant :
f. un capteur de suivi du joint soudé à l'extrémité opposée du chariot par rapport au profilomètre.

11. Système selon la revendication 1, comprenant :
g. des moyens de localisation idiothétique ou allothétique de la position du chariot le long du joint soudé.

12. Système selon la revendication 1, comprenant une base de données pour la définition des conditions de soudage pour la réalisation du joint soudé en fonction des caractéristiques des panneaux (191, 192).

13. Système selon la revendication 1 1 et la revendication 12, comprenant :
h. des moyens de mémoire pour enregistrer les conditions de soudage et la position instantanées du chariot ;

14. Système selon la revendication 1, comprenant :
j. un robot pour la manipulation et le positionnement relatif des panneaux (191, 192) avant et pendant la soudure.

## Patentansprüche

1. Autonomes System zum Schweißen von zwei abgeschrägten Platten (191, 192), insbesondere entlang einer Breitseitennaht, gemäß einer Schweißsequenz, umfassend mehrere Arbeitsgänge, und das aufweist
a. ein Untergestell (100), umfassend motorisch angetriebene Mittel zum sich Verschieben entlang einer Schweißnaht (190);
b. eine Plattform (120), die durch das Untergestell getragen wird, umfassend Aktuatoren und Führungsmittel, sogenannte Verschiebungsachsen, die geeignet sind, um einen Effektor zu tragen und relativ zu dem Untergestell (100) gemäß einer Bewegung, umfassend zwei Achsen (*y*,*z*) senkrecht zu der Laufrichtung (*x*) des Untergestells (100) entlang der Schweißnaht (190), zu verschieben;
c. einen Schweißbrenner, der durch die Plattform (120) als Effektor getragen wird;
d. einen Profilmesser (131), der durch das Untergestell getragen wird und geeignet ist, um ein Signal in Abhängigkeit des Profils der Schweißnaht (190) vor dem Schweißbrenner in der Laufrichtung (101) des Untergestells (100) entlang der Schweißnaht zu erfassen;
e. einen Steuerungscomputer (160, 161), der geeignet ist zum:
ei. Erfassen des Signals von dem Profilmesser (131) zum Messen des Profils eines offenen Abschnitts der Schweißnaht über die gesamte oder einen Teil der Länge der Schweißnaht, wobei der offene Abschnitt der Schweißnaht der nicht mit Material gefüllte Teil eines Abschnitts des Raumes ist, der an der Schweißnaht durch die Ränder der anzuordnenden Platten begrenzt ist;
eii. Ausführen von Berechnungen des Profils der Schweißnaht;
eiii. Steuern der Verschiebungsachsen der Plattform und der motorisch angetriebenen Mittel des Untergestells in Abhängigkeit von der Berechnung, die in eii) ausgeführt wird;
**dadurch gekennzeichnet, dass:**
- der Computer ausgehend von der prolifometrischen Erfassung die aufeinanderfolgenden Positionen des Massenmittelpunkts in der y-z-Ebene der offenen Abschnitte des Profils, das in ei) gemessen wird, entlang der Schweißnaht (190) berechnet; wobei die aufeinanderfolgenden Positionen des Massenmittelpunkts in der Ebene x-y die x-Bahn des Schweißbrenners entlang der Schweißnaht (190) definieren;
- das Steuern des motorisch angetriebenen Untergestells gemäß aufeinanderfolgenden Positionen des Massenmittelpunkts des offenen Abschnitts des Profils, das in ei) gemessen wird, entlang der Schweißnaht (190) ausgeführt wird;
- das Steuern der Verschiebungsachsen der Plattform so ausgeführt wird, dass der Effektor zwischen zwei mittleren Neigungen der abgeschrägten Ränder der Schweißnaht (190) verschoben wird, die bei dem ersten Messen der Schweißnaht berechnet werden, das vor dem Schweißen der Platten ausgeführt wird.

2. System nach Anspruch 1, wobei die Berechnung, die in eii) ausgeführt wird, die Schritte umfasst, bestehend aus:
i Definieren, während der ersten Messung der Schweißnaht, eines Dreiecks (260), dessen Spitze der Schnittpunkt von zwei Geraden ist, die die mittleren Neigungen (291, 292) der Schrägen der geschweißten Platten (191, 192) definieren, und dessen Basis durch die Oberfläche der Platten begrenzt ist, die der Spitze gegenüberliegt;
ii ausgehend von dem Profil des offenen Abschnitts (270, 275) der Schweißnaht, das in ei) erfasst und gemessen wird, Zentrieren des Dreiecks (260), das in i) erhalten wird, indem die Basis mit der Spitze der Platten (191, 192) in Übereinstimmung gebracht wird und indem der Massenmittelpunkt (261) des Dreiecks (260) an dem Massenmittelpunkt (271, 276) des offenen Abschnitts (270, 275) des Profils seitlich ausgerichtet wird, das in ei) erhalten wird.

3. System nach Anspruch 2, wobei die Berechnungen, die in eii) ausgeführt werden, eine Berechnung der Amplitude von Schwingungen des Brenners und Verzögerungen umfassen, die auf Skalarparametern basiert, die durch Mittelung und Summierung des Signals von dem Profilmesser erhalten werden.

4. System nach Anspruch 3, wobei das Berechnen der Amplitude der Schwingungen des Brenners die Schritte umfasst, bestehend aus:
iii. Definieren einer Linie (280) parallel zu der Basis des Dreiecks, die einer mittleren Höhe des Profils, das in ei) gemessen wird, relativ zu der Basis des Dreiecks (260), das in i) erhalten wird, entspricht und auf dem Profil, das in ii) erhalten wird, neu zentriert wird;
iv. Berechnen der Schnittpunkte dieser mittleren Linie (280) mit den zwei anderen Seiten des Dreiecks, das in i) definiert ist;
v. Definieren der Amplitude der Schwingungen, die auf dem Massenmittelpunkt (271, 276) des offenen Abschnitts des Profils zentriert sind, das in ei) erhalten wird, durch die Länge (285) des Segments (280) der mittleren Linie, zwischen den zwei Schnittpunkten, die in iv) berechnet werden.

5. System nach Anspruch 3, wobei das Berechnen der rechten und der linken Zeitverzögerungen die Schritte umfasst, bestehend aus:
vi. Berechnen eines mittleren ersten Wertes (285) von der Basis des Dreiecks, das in i) berechnet wird, des Abschnitts des Profils, das in ei) erhalten wird, der sich links von dem Massenmittelpunkt des offenen Abschnitts befindet;
vii. Berechnen eines mittleren zweiten Wertes (286) von der Basis des Dreiecks, das in i) berechnet wird, des Abschnitts des Profils, das in ei) erhalten wird, der sich rechts von dem Massenmittelpunkt des offenen Abschnitts befindet;
viii. Definieren des Unterschieds der Verzögerung rechts und links in Abhängigkeit des Unterschieds des mittleren ersten und zweiten Wertes, die in vi) und vii) berechnet werden.

6. System nach Anspruch 1, wobei die motorisch angetriebenen Verschiebungsmittel des Untergestells Magnetraupen treiben.

7. System nach Anspruch 6, wobei die Plattform drei zueinander senkrechte lineare Verschiebungsachsen umfasst.

8. System nach Anspruch 7, wobei die Plattform (120) eine Drehverschiebungsachse umfasst, die parallel zu der Achse (z) einer Gierdrehung des Untergestells ist.

9. System nach Anspruch 7, wobei die Plattform eine Verbindungsschnittstelle umfasst, die es ihr ermöglicht, unterschiedliche Effektoren zu tragen.

10. System nach Anspruch 1, umfassend:
f. einen Verfolgungssensor der Schweißnaht an dem gegenüberliegenden Ende des Untergestells relativ zu dem Profilmesser.

11. System nach Anspruch 1, umfassend:
g. Mittel einer idiothetischen oder allothetischen Lokalisierung der Position des Untergestells entlang der Schweißnaht.

12. System nach Anspruch 1, umfassend eine Datenbank zum Definieren von Schweißbedingungen zum Ausführen der Schweißnaht in Abhängigkeit von Merkmalen der Platten (191, 192).

13. System nach Anspruch 11 und 12, umfassend:
h. Speichermittel zum Aufzeichnen der momentanen Bedingungen des Schweißens und der Position des Untergestells;

14. System nach Anspruch 1, umfassend:
j. einen Roboter zum Bedienen und relativen Positionieren der Platten (191, 192) vor und während der Schweißung.

## Claims

1. A system for autonomous welding of two chamfered panels (191, 192), in particular along a seam joint, according to a welding sequence comprising a plurality of passes and comprising
a. a carriage (100) comprising motorized means for moving along a welded joint (190);
b. a platform (120) carried by the carriage comprising actuators and guide means, called movement axes, capable of supporting and moving an effector relative to the carriage (100) according to a movement comprising two axes (y,z) perpendicular to the direction (x) in which the carriage (100) advances along the welded joint (190);
c. a welding torch supported as an effector by said platform (120);
d. a profilometer (131) carried by the carriage and adapted to acquire a signal depending on the profile of the welded joint (190) in front of the welding torch in the direction (101) in which the carriage (100) advances along said weld joint;
e. a control computer (160, 161) capable of:
ei. acquiring the signal from the profilometer (131) to measure the profile of an open section of the welded joint over all or part of the length of the welded joint, the open section of the welded joint being the part not filled with material of a section of the space delimited, at the welded joint, by the edges of the panels to be assembled;
eii. performing profile calculations of the welded joint;
eiii. controlling the movement axes of the platform and the motorized means of the carriage as a function of the calculation carried out in eii);
**characterized in that:**
- the computer calculates, from the profilometer acquisition, the successive positions of the barycenter in the y-z plane of the open sections of the profile measured in ei) along the welded joint (190); the successive positions of the barycenter in the x-y plane define the trajectory in x of the welding torch along the welded joint (190);
- the controlling of the motorized means of the carriage is carried out by tracking successive positions of the barycenter of the open section of the profile measured in ei) along the welded joint (190);
- the controlling of the axes of movement of the platform is carried out so that the effector is moved between two average slopes of the chamfered edges of the weld (190), calculated during the first measurement of said welded joint, carried out before the welding of the panels.

2. The system according to claim 1, wherein the calculation performed in eii) comprises the steps of:
i defining, during the first measurement of the welded joint, a triangle (260) whose apex is the intersection of the two straight lines defining the average slopes (291, 292 ) of the chamfers of the welded panels (191, 192) and whose base is delimited by the surface of the welded panels opposite said apex;
ii from the profile of the open section (270, 275) of the welded joint acquired and measured in ei), centering the triangle (260) obtained in i) by making the base coincide with the apex of the panels (191, 192) and by laterally aligning the barycenter (261) of the triangle (260) with the barycenter (271, 276) of the open section (270, 275) of the profile obtained in ei).

3. The system according to claim 2, wherein the calculations carried out in eii) comprise a calculation of the amplitude of the torch oscillations and time delays is based on scalar parameters obtained by averaging and summing the signal from the profilometer.

4. The system according to claim 3, wherein calculating the amplitude of the oscillations of the torch comprises the steps of:
iii. defining a line (280) parallel to the base of the triangle corresponding to average height of the profile measured in ei) relative to said base of the triangle (260) obtained in i) and recentered on the profile obtained in ii);
iv. calculating the intersection points of this average line (280) with the other two sides of the triangle defined in i);
v. defining the amplitude of the oscillations, centered on the barycenter (271, 276) of the open section of the profile obtained in ei), by the length (285) of the segment of the average line (280), comprised between the two intersections calculated in iv).

5. The system according to claim 3, wherein calculating the right and left time delays comprises the steps of:
vi. calculating a first average value (285) from the base of the triangle calculated in i), of the profile portion obtained in ei) located to the left of the barycenter of the open section;
vii. calculating a second average value (286) from the base of the triangle calculated in i), of the profile portion obtained in ei) located to the right of the barycenter of the open section;
viii. defining the right and left time delay difference as a function of the difference of the first and second average values calculated in vi) and in vii).

6. The system according to claim 1, wherein the motorized means for moving the carriage drive magnetic tracks.

7. The system according to claim 6, wherein the platform comprises three linear movement axes perpendicular to each other.

8. The system according to claim 7, wherein the platform (120) comprises a rotational movement axis parallel to the yaw rotation axis (z) of the carriage.

9. The system according to claim 7, wherein the platform comprises a connection interface allowing it to support different effectors.

10. The system according to claim 1, comprising:
f. a sensor for tracking the joint welded at the opposite end of the carriage relative to the profilometer.

11. The system according to claim 1, comprising:
g. idiothetic or allotropic means of locating the position of the carriage along the welded joint.

12. The system according to claim 1, comprising a database for defining the welding conditions for the production of the welded joint as a function of the characteristics of the panels (191, 192).

13. The system according to claim 11 and claim 12, comprising:
h. memory means for recording the welding conditions and the instantaneous position of the carriage;

14. The system according to claim 1, comprising:
j. a robot for the handling and relative positioning of the panels (191, 192) before and during the welding.
